# EUROPEAN PATENT APPLICATION

(11) **EP 4 064 441 A1**
(43) Date of publication of application: **28.09.2022**
(21) Application number: 21165304.3
(22) Date of filing: 26.03.2021
(51) Int. Cl.: H01M 50/403, H01M 50/414, H01M 50/44, H01M 50/449, H01M 50/469, H01M 50/411, H01M 10/06, D04H 1/00

(54) **NON-WOVEN GAUNTLETS FOR BATTERIES**

(71) Applicant: Amer-Sil sa, 8281 Kehlen (LU)
(72) Inventor: GOKSU, Ihsan, 8281 Kehlen (LU)
(74) Representative: Brantsandpatents bvba

(57) **Abstract**

The current invention relates to a multitubular sheathing for electrodes of industrial batteries, which defines a plurality of longitudinal pockets receiving the terminals of an electrode inside, said sheathing being made of non-woven fabric formed from staple fibers made integral with one another, wherein the surface of said sheathing contacting said terminals exhibits a contact layer of non-woven fabric having at least 10% of fibers in a tangential direction. The invention further relates to a process for making said multitubular sheathing.

## Description

### FIELD OF THE INVENTION

The present invention is related to a multitubular gauntlet for batteries, particularly lead-acid batteries, comprising at least one sheet of fabric of porous material made of thermos-formed non-woven fabric.

### BACKGROUND

Multitubular sheathings or gauntlets for male electrodes (i.e. positive) for industrial batteries have long been known.

The tubular bodies are required to provide a number of functions including: enclosure and support of the active material to maintain the active material in contact with the spines; maintenance of the dimensional stability of the pencils of active material particularly during periods of swelling of the active material; and, finally, provision of adequate communication between the electrolyte and the active material throughout the length of the tubular bodies.

From the early 1950s up to now, the tubular plate has evolved from the single tube design (PVC tubes and woven or braided tubes of C-glass fibers protected first by a perforated plastic armor, then by impregnation with phenolic resin to the more economical and productive multitube gauntlet concept. The first generation of gauntlets, still in use for some applications, were made of woven polyester fabric impregnated with phenolic and then thermoplastic acrylic resin. Since the 1980s, the tubular gauntlet has further evolved to include modern non-woven fabrics.

When a lead acid battery is cycled frequently or deeply the positive active material will shed, the negative active material will sulfate, the negative lugs may thin, the acid is likely to stratify especially when operated in a partial state of charge and finally hydration shorts may develop through the separator. Many design options are being explored to address these situations but let's review those associated with the separators. Furthermore, lost active material may short-circuit or form corrosion products, negatively impacting the conductivity of the battery.

The present invention aims to resolve at least some of the problems and disadvantages mentioned above. The aim of the invention is to provide a method which eliminates those disadvantages. The present invention targets at solving at least one of the aforementioned disadvantages. In particular the present invention aims to produce multitubular sheathing which prevents shedding of the active material and aids quick evacuation of all lost active material.

### SUMMARY OF THE INVENTION

The present invention and embodiments thereof serve to provide a solution to one or more of above-mentioned disadvantages. To this end, the present invention relates to a multitubular sheathing for electrodes of industrial batteries according to claim 1.

Preferred embodiments of the device are shown in any of the claims 2 to 11. A specific preferred embodiment relates to an invention according to claims 2-4. The inventors have surprisingly found that having a quantity of fiber contacting the electrode in the tangential direction reduces the shedding of electrode material. This is achieved by aiding the active material to stay in place longer. This was found to be particularly beneficial when the batteries were placed upright, i.e. its longitudinal direction being substantially parallel with gravity.

A specific preferred embodiment relates to an invention according to claim 5. The inventors have surprisingly found that having a quantity of fiber in the longitudinal direction on the external surface of the multitubular sheathing promotes the evacuation of lost active material which has permeated through the sheathing material. The lost active material is generally evacuated towards a collection prism on the bottom of the battery setup.

In a second aspect, the present invention relates to a process according to claim 12. More particular, the process as described herein provides for a multitubular gauntlet which improves battery life and extending the amount of charge-discharge cycles.

### DESCRIPTION OF FIGURES

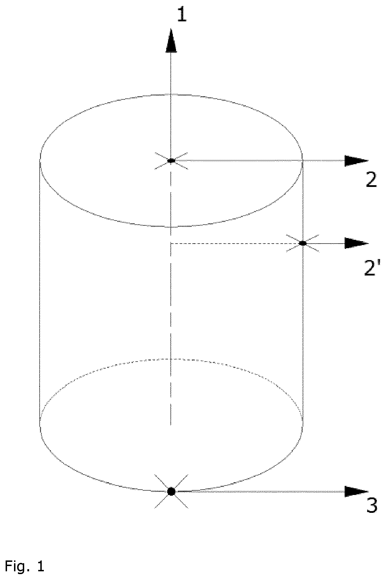

**Fig. 1** is a schematic view of the cylindrical directions as they are used herein.
- 1: The axial direction is parallel to the axis of the cylinder.
- 2, 2': The radial direction is perpendicular to an axis, along a radius of a circle construing said cylinder.
- 3: The tangential direction is tangential to the circle construing said cylinder, and thus perpendicular to the radial direction at that location.

### DETAILED DESCRIPTION OF THE INVENTION

The present invention concerns a multitubular gauntlet for industrial batteries. The present invention further concerns a process for the production thereof.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.,* any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Functionally, the sheathing has the function of containing and retaining the active matter laid on the electrode terminals.

Fibers being oriented or directed as described herein is meant to encompass variations of +/-20° deviations from said direction or less, preferably +/-10° deviations from said direction or less, more preferably +/-5° deviations from said direction or less, even more preferably +/-1° deviations from said direction or less, and still more preferably +/-0.1° deviations from said direction or less of and from the specified value, in so far such variations are appropriate to perform in the disclosed invention.

The "contact layer" as described herein relates to the inner surface of the multitubular sheathing. The inner surface of the multitubular sheathing is intended to be in direct contact with the terminals of the electrodes when in use.

By "staple fibers" it is generally meant fibers cut into small "crops" (or short fibers), which are in bulk and therefore without a predetermined or preferential arrangement.

### Multitubular sheathing

In a first aspect, the invention relates to multitubular sheathing for electrodes of industrial batteries, which defines a plurality of longitudinal pockets receiving the terminals of an electrode inside, said sheathing being made of non-woven fabric formed from staple fibers made integral with one another, wherein the surface of said sheathing contacting said terminals exhibits a contact layer of non-woven fabric having at least 10% of fibers in a tangential direction.
The inventors have surprisingly found that having a quantity of fiber contacting the electrode in the tangential direction reduces the shedding of electrode material. This is achieved by aiding the active material to stay in place longer. This was found to be particularly beneficial when the batteries were placed upright, i.e. its longitudinal direction being substantially parallel with gravity.

A further surprising effect and a considerable advantage of the gauntlets according to the present invention is the ability to come back to a narrower tube diameter after successive expansions. This will enable the gauntlet to constrain the positive active mass very efficiently and avoid density changes, connection loss... leading to early capacity decay. The gauntlets made according to the present invention can be used even in very aggressive filling technology due to their very high rigidity, without affecting the electrical properties of the battery because of their reduced electrical resistance. The improvement of the elastic properties and the higher filament denier render possible their use even in the most demanding applications like stationary gel batteries or stationary flooded batteries. This product opens allows improved use in more demanding markets.

Preferably, the multitubular sheathing is obtained starting from two sheets of non-woven fabric material connected to each other (preferably by sewing) along connection lines or seams parallel to one another. The pitch of such lines is regular and is suitably selected according to the diameter of terminals of electrode. A plurality of longitudinal pockets therefore creates between the two sheets. Said longitudinal pockets between two sheets may be tubular shaped by thermo-forming.

In a preferred embodiment, the contact layer has at least 20% of fibers in a tangential direction, more preferably the contact layer has at least 25% of fibers in a tangential direction, more preferably the contact layer has at least 30% of fibers in a tangential direction, more preferably the contact layer has at least 35% of fibers in a tangential direction, more preferably the contact layer has at least 40% of fibers in a tangential direction, more preferably the contact layer has at least 45% of fibers in a tangential direction, more preferably the contact layer has at least 50% of fibers in a tangential direction, more preferably the contact layer has at least 55% of fibers in a tangential direction, more preferably the contact layer has at least 60% of fibers in a tangential direction, more preferably the contact layer has at least 65% of fibers in a tangential direction, more preferably the contact layer has at least 70% of fibers in a tangential direction, more preferably the contact layer has at least 75% of fibers in a tangential direction, more preferably the contact layer has at least 80% of fibers in a tangential direction, more preferably the contact layer has at least 85% of fibers in a tangential direction, more preferably the contact layer has at least 90% of fibers in a tangential direction, more preferably the contact layer has at least 95% of fibers in a tangential direction, more preferably the contact layer has at least 96% of fibers in a tangential direction, more preferably the contact layer has at least 97% of fibers in a tangential direction, more preferably the contact layer has at least 98% of fibers in a tangential direction, more preferably the contact layer has at least 99% of fibers in a tangential direction.

In an embodiment, the multitubular sheathing further comprises at least one non-contacting layer. The "non-contacting layer" as described herein relates to any layer of the multitubular sheathing which is not intended to be in direct contact with the terminals of the electrodes provided in the pockets when in use. This can thus relate to one or more internal layers, which layers do not make up the surface of the non-woven fabric, as well as a surface layer which is not in contact with the pockets formed by the multitubular sheathing. In particular the non-contacting layer includes internal layers as well as the outer surface of the multitubular sheathing material as this is not in contact with the terminals of said electrode provided within the pockets when in use.

In a preferred embodiment, at least one non-contacting layer comprises fibers oriented in the longitudinal direction. In a more preferred embodiment, the multitubular sheathing comprises at least one non-contacting layer having at least 20% of fibers in the longitudinal direction, more preferably at least one non-contacting layer having at least 25% of fibers in the longitudinal direction, more preferably at least one non-contacting layer having at least 30% of fibers in the longitudinal direction, more preferably at least one non-contacting layer having at least 40% of fibers in the longitudinal direction, more preferably at least one non-contacting layer having at least 50% of fibers in the longitudinal direction, more preferably at least one non-contacting layer having at least 60% of fibers in the longitudinal direction, more preferably at least one non-contacting layer having at least 70% of fibers in the longitudinal direction, more preferably at least one non-contacting layer having at least 80% of fibers in the longitudinal direction, more preferably at least one non-contacting layer having at least 85% of fibers in the longitudinal direction, more preferably at least one non-contacting layer having at least 90% of fibers in the longitudinal direction, more preferably at least one non-contacting layer having at least 95% of fibers in the longitudinal direction, more preferably at least one non-contacting layer having at least 96% of fibers in the longitudinal direction, more preferably at least one non-contacting layer having at least 97% of fibers in the longitudinal direction, more preferably at least one non-contacting layer having at least 98% of fibers in the longitudinal direction, more preferably at least one non-contacting layer having at least 99% of fibers in the longitudinal direction. Having a non-contact layer with fibers in the longitudinal direction provides the non-woven with strength and resistance to deformation in said longitudinal direction. In particular it is noted such a layer aids in keeping the contact layer in the desired position when inserting the terminals of the electrodes into the pockets of the multitubular gauntlet. It also aids in keeping the contact layer in the desired position if said multitubular sheathing is thermoformed.

In a preferred embodiment, at least one non-contacting layer comprises fibers oriented in the longitudinal direction. In a more preferred embodiment, the multitubular sheathing comprises at least one non-contacting layer having at least 20% of fibers in the longitudinal direction, more preferably at least one non-contacting layer having at least 25% of fibers in the longitudinal direction, more preferably at least one non-contacting layer having at least 30% of fibers in the longitudinal direction, more preferably at least one non-contacting layer having at least 40% of fibers in the longitudinal direction, more preferably at least one non-contacting layer having at least 50% of fibers in the longitudinal direction, more preferably at least one non-contacting layer having at least 60% of fibers in the longitudinal direction, more preferably at least one non-contacting layer having at least 70% of fibers in the longitudinal direction, more preferably at least one non-contacting layer having at least 80% of fibers in the longitudinal direction, more preferably at least one non-contacting layer having at least 85% of fibers in the longitudinal direction, more preferably at least one non-contacting layer having at least 90% of fibers in the longitudinal direction, more preferably at least one non-contacting layer having at least 95% of fibers in the longitudinal direction, more preferably at least one non-contacting layer having at least 96% of fibers in the longitudinal direction, more preferably at least one non-contacting layer having at least 97% of fibers in the longitudinal direction, more preferably at least one non-contacting layer having at least 98% of fibers in the longitudinal direction, more preferably at least one non-contacting layer having at least 99% of fibers in the longitudinal direction. Having a non-contact layer with fibers in the longitudinal direction provides the non-woven with strength and resistance to deformation in said longitudinal direction. In particular it is noted such a layer aids in keeping the contact layer in the desired position when inserting the terminals of the electrodes into the pockets of the multitubular gauntlet. It also aids in keeping the contact layer in the desired position if said multitubular sheathing is thermoformed.

In a further preferred embodiment, the "external surface layer" comprises fibers oriented in the longitudinal direction. The "external surface layer" is the surface layer on the outside of the tubular sheathing. It is not in contact with the terminals of the electrodes, and consequently a particular example of a non-contacting layer. In a more preferred embodiment, the external surface layer of the multitubular sheathing comprises has at least 20% of fibers in the longitudinal direction, more preferably the external surface layer has at least 25% of fibers in the longitudinal direction, more preferably the external surface layer has at least 30% of fibers in the longitudinal direction, more preferably the external surface layer has at least 35% of fibers in the longitudinal direction, more preferably the external surface layer has at least 40% of fibers in the longitudinal direction, more preferably the external surface layer has at least 45% of fibers in the longitudinal direction, more preferably the external surface layer has at least 50% of fibers in the longitudinal direction, more preferably the external surface layer has at least 55% of fibers in the longitudinal direction, more preferably the external surface layer has at least 60% of fibers in the longitudinal direction, more preferably the external surface layer has at least 65% of fibers in the longitudinal direction, more preferably the external surface layer has at least 70% of fibers in the longitudinal direction, more preferably the external surface layer has at least 75% of fibers in the longitudinal direction, more preferably the external surface layer has at least 80% of fibers in the longitudinal direction, more preferably the external surface layer has at least 85% of fibers in the longitudinal direction, more preferably the external surface layer has at least 90% of fibers in the longitudinal direction, more preferably the external surface layer has at least 95% of fibers in the longitudinal direction, more preferably the external surface layer has at least 96% of fibers in the longitudinal direction, more preferably the external surface layer has at least 97% of fibers in the longitudinal direction, more preferably the external surface layer has at least 98% of fibers in the longitudinal direction, more preferably the external surface layer has at least 99% of fibers in the longitudinal direction.

Multitubular sheathing or battery gauntlet are used to avoid shedding of the active mass of the terminals of electrodes. Preferably particles cannot permeate through the multitubular sheathing. In practice over time, small amounts of electrode material manage to leak through the pores within the multitubular gauntlet. This electrode material impedes the working of the battery and may lead to "short circuiting". Preferably the material which is no longer contained within the pockets of the multitubular sheathing is removed. This is generally achieved by evacuating the lost particles at the bottom of the battery setup. The inventors have found that having the fibers along the external surface layer of the multitubular sheathing in the longitudinal direction aids in evacuating the particles which have permeated through said sheathing. This reduces the efficiency loss expected for batteries which go through many charge and discharge cycles.

In another preferred embodiment, at least one non-contacting layer has randomly oriented fibers. Randomly oriented fibers aid in maintaining the fiber orientation of the other layers, in particular the contact layer and optional external surface layer. The randomly oriented fibers can dislodge and form small tears, which leads to the gauntlet losing its desired functionality. Pores and tears form in particular during insertion or injection of the electrode terminals, thermoforming of the multitubular shape and during transport and use, for example due to electrode breathing.

In a further preferred embodiment, the multitubular sheathing comprises at least two non-contacting layers, at least one of said non-contacting layers having randomly oriented fibers and at least one of said non-contacting layers having fibers oriented in the longitudinal direction. The fibers in the longitudinal direction aid in providing the mechanical properties required in the longitudinal direction and the randomly oriented fibers reduce the anisotropy of the properties, in particular the mechanical properties, of said multitubular sheathing material. This helps in preventing permeable pores, tearing or holes as a result of processing, use (in particular electrode breathing) or transport.

The sheathing is preferably made starting from (staple) fibers consisting of acid resistant polymers. In a more preferred embodiment, said acid resistant polymers are chosen from the list of polyester, polyolefin or polyamide, in a more preferred embodiment said acid resistant polymers are chosen from the list of PET, PTB, polypropylene, polyamide 6 and polyamide 6,6. In the most preferred embodiment, the staple fibers are segmented fibers, preferably PBT and polyamide 6 segmented fibers.

In a preferred embodiment, the staple fibers used comprise thermos-forming or thermos-plastic fibers. Thermo-forming or thermo-plastic fibers are understood to comprise both fibers melting at temperatures below 200°C, such as polypropylene fibers and bicomponent fibers, and fibers melting at temperatures above 200°C, such as polyester fibers and polyamide fibers. Advantageously, thermo-plastic fibers undergo a glass transition state in the passage from the fused state to the solid state. This is used to impart stiffness to the end product.

Preferably but not necessarily, bicomponent fibers may be coaxially extruded. In a more preferred embodiment, the high melting polymer is arranged at the center and the low melting polymer is outside. In another preferred embodiment, the bicomponent fibers may be segmented. Segmented bicomponent fibers essentially consist of at least two segments, wherein subsequent segments mainly comprise of a different polymer. In another preferred embodiment, the bicomponent fibers may be island in the sea fibers. Islands-in-the-sea extrusions are also called matrix-fibril, because fibrils of one polymer are distributed in the matrix of another polymer. The matrix is known as the "sea", and the fibrils are known as islands. The matrix is a soluble material that is washed away by a suitable solvent at some point in the manufacturing process. What remains at the microscopic level are bundles of thin parallel fibers, resulting in a fabric that is very soft and flexible.
The staple fibers according to the present invention are made integral with one another. This may be achieved through any of the bonding technologies known in the art. Preferred embodiments as described for the method are also preferred for the product.

In a preferred embodiment, the fibers have a count between 0.1 and - 6.7 dTex, preferably a count between 1.0 to 3.3 dTex, more preferably 1.0 and 2.5 dTex. dTex refers to the grams of fiber by 10 000m length. The sheathing exhibits a closer and more compact structure such as to make it less permeable (to be understood as greater filtering capacity against the active mass of the electrodes without increase of electrical resistance) - basic weight being equal - as compared to sheathing obtained starting from fibers with a count above 2.5 dTex.

Advantageously, it is also possible to use staple fibers with count comprised between 0.1 and 0.5 dTex, or microfibers, thus obtaining a non-woven fabric with an even closer structure against an increase of the manufacturing costs (essentially related to the higher cost of microfibers). Using staple microfibers, the "retaining" (filtering) effect towards the active matter (for example lead oxide) being equal, it is possible to make sheathing with lower count.

In a preferred embodiment, the fiber cut of the staple fibers is comprised between 30 and 80 mm, more preferably between 30 and 65 mm.

In an embodiment, said non-woven fabric further comprises a thermoplastic resin chosen among the group consisting of acrylic resins, methyl acrylate copolymer resins, styrene-butadiene resins, phenolic resins or mixtures thereof.

### Process for the making of said multitubular sheathing for electrodes

In a second aspect, the invention relates to a process for making multitubular sheathing for electrodes, comprising the steps of :
- making a non-woven fabric starting from staple fibers; and
- forming said non-woven fabric according to the multitubular sheathing shape in order to create a plurality of longitudinal pockets intended to receive the terminals of an electrode inside, said non-woven fabric being made so that the surface of said sheathing intended to contact said terminals has at least 10% of fibers in a tangential direction.

However, it is obvious that the invention is not limited to this application. The method according to the invention can be applied in all sorts of batteries and electrochemical cells.

Staple fibers are first subject to a series of operations (in se known) aimed at obtaining a mass of material as homogeneous as possible. If the sheathing is made with fibers having different composition, the mixing of the different fibers can also take place in this stage.

Next, the fibers are processed by carding machines for making fiber webs. The fiber webs are then overlapped by a card web device according to one or more different preferential orientations (for example, longitudinal and/or transversal) for creating a fiber pad of the desired basic weight. It is also possible to arrange the fibers in an irregular manner (random fibers), optionally in a portion only of the pad. Preferably, at several cross carding machines and directional carding machines are provided, whose respective processing lines are connected at the card web device.

Advantageously, as shall be explained hereinafter, it is possible to make pads formed by layers featuring different preferential orientations of the fibers. As shall be explained hereinafter, for example it is possible to make a pad with fibers oriented in the cross direction in at least one layer (preferably the contacting layer, where the cross direction turns into the tangential direction of the multitubular shape) and with alternatively oriented or randomly oriented fibers in other layers.

Advantageously, feeding the carding machines with fibers of different composition it is possible to make pads formed by layers featuring not just different preferential orientation of the fibers, but also (or as an alternative) by different fiber composition (for example, layer with polyester fibers and layer with polypropylene fibers, or layer with monocomponent polyester fibers and layer with bicomponent polyester fibers, or still layers having different mixtures of fibers).

At this point, the fibers forming the pad are physically "linked" to one another. The staple fibers according to the present invention are made integral with one another. This may be achieved through any of the bonding technologies known in the art. In one embodiment, the fibers may be made integral to one another through mechanical bonding. In a further, preferred embodiment, fibers are made integral to one another through needle punching. In a more preferred embodiment, the fibers are made integral to one another through spun lacing. The difference between the spunlacing technology and conventional needle punching is that this "bonding" takes place by very thin water jets at a high pressure (that in the practice act as needles).
In another embodiment, the fibers may be made integral to one another through chemical bonding. Chemical bonding methods include but are not limited to : spraying or impregnation with water, solvents or resin, followed by heat treatment to remove water or solvents or cure resin; foulard bonding and foam bonding (foam-based foulard). In another embodiment, the fibers may be made integral to one another through thermal bonding. Thermal bonding methods include but are not limited to : hot calendaring and boiling point calendaring wherein the melting point of at least one polymer is exceeded.

In a preferred embodiment the staple fibers are made integral with one another through needle punching, more preferably spun lacing. At the outlet from the spunlacing zone, the material is bonded but wet. The material is thus sent to a furnace so as to allow drying thereof and allow any thermo-plastic fibers to "react". More in detail, if bicomponent thermo-plastic fibers are used the temperatures and the standing times of the pad within the furnace are preferably selected so that the low melting component reaches the fusion so as to allow the various fibers to link to each other and once cooled, to stiffen the material. If monocomponent thermo-plastic fibers (for example, polypropylene) are used, the temperatures and the standing times of the pad within the furnace are preferably selected so that the thermo-plastic fibers soften without melting completely, so as to link to each other and to the other fibers without losing their thread-like shape. Advantageously, when an optional subsequent resin-bonding of the non-woven fabric is envisaged and monocomponent fibers are used, the furnace treatment step may also be carried out for drying purpose only, avoiding the fiber softening or melting.

In another process flow, this drying step may be carried out first to remove water; and then be followed by a thermal treatment for at least partial bonding of the staple fibers to make them integral with one another.

Preferably, after the furnace treatment step, the pad may be subject - prior to cooling - to a calendaring step to obtain a smaller thickness and a smoother surface, and thus facilitate the subsequent processes. Advantageously, calendaring may be carried out in hot or cold conditions. Preferably calendaring is carried out in hot conditions. Preferably, calendaring is carried out with smooth calendars. In this way, especially when hot calendaring is adopted, the forming of localized melting points on the pad surface is prevented, which in operation, that is, with the sheathing in contact with the electrode terminals, would make zones of higher electrical resistance.

On the other hand, in many solutions of the prior art (non-woven fabric made by spunbonding) the problem mentioned above occurs frequently. The pad calendaring (normally hot) in fact is carried out by embossing calendars, usually of the type with relief points (as envisaged in the technology known as "point bonded"). Since the relief points have a limited surface, in fact they are preferential heat transmission zones, at which the complete melting of the contacting material easily takes place.

At the end of the processes described above, the non-woven fabric is in the form of sheets that may be rolled up for optional storage.

If the use of thermoplastic resins is envisaged, non-woven sheets are then subject to resin-bonding, according to known techniques.
In a preferred embodiment, said non-woven fabric comprises bonding with a thermoplastic resin. In a more preferred embedment, said thermoplastic resin chosen among the group consisting of acrylic resins, methyl acrylate copolymer resins, styrene-butadiene resins, phenolic resins or mixtures thereof. According to a preferred embodiment, the non-woven fabric is impregnated with a thermoplastic resin. The resin is chosen among the group consisting of: acrylic resins like e.g. methyl methacrylate resins or butyl acrylate/methyl acrylate copolymer resins, styrene-butadiene resins, phenolic resins or mixtures thereof. The fabric can be impregnated during the production between the calendaring and the winding steps, or the impregnation can be made off line.

In another preferred embodiment, said non-woven fabric does not comprise a thermoplastic resin. Not utilizing thermoplastic resins is particularly advantageous for the end-of-life of the multitubular sheathing, in particular allowing easier separation and recycling of the polymers.

Non-woven sheets are then cut to the desired size based on the size of the electrodes.

As already mentioned, the sheathing according to the invention is obtained by overlapping two sheets of non-woven fabric of suitable size. The two sheets are then connected to each other (preferably by sewing) along parallel lines forming pockets intended for seating the electrode terminals. In a preferred embodiment, the multitubular sheathing shape is formed from said fabric by sewing, stitching, thermal bonding, ultrasonic bonding, gluing or a combination thereof. In a more preferred embodiment, the two sheets are connected to each other by sewing along parallel lines forming pockets intended for seating the electrode terminals. In a more preferred embodiment, the process of forming said multitubular shape from said fabric comprises thermoforming to obtain a multitubular shape. Operatively, during the thermo-forming step such temperatures are achieved as to allow the softening/melting of the thermo-forming fibers and/or the complete cross-linking of any thermoplastic resins therein.

The most preferred process to manufacture non-woven gauntlets consists on joining two strips of polyester non-woven fabric at predetermined intervals with a multi-needles sewing machine, then thermoforming the multitubular panel into the desired tube geometry. The thermoforming is made in an oven by inserting hot rods in-between both fabric layers, between each two adjacent sewing lines. The fabric has to have the ability to shrink around the rods at the desired temperature (typically between 160 and 200°C) in order to keep the 3 dimensional tube shape and dimensions. The preferred shrinkage is typically around 1.5% at 160°C and 2.5% at 200°C. If the shrinkage is higher, the fabric will be too strongly bound around the rods, leading to production problems (low speed, difficulty to push the rods out of the formed tubes...). If the shrinkage is lower, the formed tubes will not keep the requested shape, the tube will not be rigid enough and the gauntlets dimensions will not be adequate (width and thickness).

Therefore, beside the initial fabric strip width and sewing pitch, the fabric shrinkage and applied temperature during formation are very important parameters, as they determine the final gauntlet width and tubes diameter. These dimensions are of first importance, as they will fix the final positive plate width and thickness (directly correlated to the amount of active mass entrapped and therefore to the battery capacity) to be inserted in the battery container.

Besides the shrinkage, other fabric characteristics are important for a good final gauntlet quality:
- The tensile strength of the fabric in the machine direction (MD) and cross direction (CD) has to be high enough so that the formed gauntlet resists high internal pressures (burst strength). The reason is that the gauntlets filling with the positive active mass may be done by injection of a lead oxide paste at moderate, high or very high pressure depending on the filling machine.
- The electrical resistance has to be as low as possible in order to limit the internal resistance of the battery cells.
- The fabric elongation has to be chosen carefully so that the finished gauntlets have good elastic properties. This is of first importance because the positive active mass undergoes volume changes during alternate charges and discharges due to the alternate transformation of PbO2 into PbSO4 and vice versa. This phenomenon is known as active mass "breathing". The gauntlet has to limit the active mass expansion and, more importantly, to be elastic enough to perfectly constrain the active mass during contraction and recover its initial tube diameter after contraction. This is the only way to ensure the permanent cohesion of the active mass particles among themselves and around the lead spine and is of first importance to maintain the capacity along the life.

The use of staple fibers allows imparting higher thickness evenness as compared to the use of spunbond fibers. This is essentially due to the possibility of compacting short fibers to one another better than with spunbond fibers. In particular, such effect is further increased if low count staple fibers are used, that is, in particular comprised between 0.1 to 6.7 dTex, more preferably 0.1 to 3.3 dTex, even more preferably 1.0 and 3.3 dTex.

As compared to conventional needle punching techniques (for example by needles), the punching by spunlacing allows obtaining a product with a "closer" structure, meaning that the fibers are bonded in a more effective and even manner. Spunlacing further allows using lower count fibers, with the further advantage of obtaining an end product with higher density and more even surface features. This imparts greater regularity of performance to the sheathing.

The fact of adopting spunlacing instead of the traditional needle punching further prevents all the problems related to the breakage of needles and in particular the capture of the same within the spunbonded fabric. Advantageously, using staple fibers gives good results at least in terms of evenness of the end material, also adopting the traditional needle punching (a possibility covered by the present finding).

According to a first preferred embodiment of the invention, the thermo-forming fibers consist of bicomponent polyester fibers, that is, fibers consisting of two coaxially extruded polyesters, where at the centre a first polyester is arranged melting at a higher temperature than that of thermo-forming of the same sheathing (for example a normal polyester melting at about 260°C), whereas a second polyester is arranged outside melting at a temperature equal to or below the thermo-forming temperature of the sheathing (for example melting between 110°C and 160°C).

According to this first preferred embodiment, in terms of fiber composition, the non-woven fabric preferably comprises polyester fibers (monocomponent) comprised between 15 and 85% of the total fiber present, more preferably between 40% and 60% of the total fiber present, and bicomponent polyester fibers comprised between 40% and 60% of the total fiber in the nonwoven.

Preferably, the polyester of the monocomponent fibers will be for example of the same type that makes the core of the bicomponent fibers and in any case, it will have a melting temperature higher than that of polyester that makes the skirt of the bicomponent fibers.

According to another embodiment, the non-woven fabric may be 100% made of bicomponent polyester fibers.

## Claims

1. Multitubular sheathing for electrodes of industrial batteries, which defines a plurality of longitudinal pockets receiving the terminals of an electrode inside, said sheathing being made of non-woven fabric formed from staple fibers made integral with one another, **characterized in that** the surface of said sheathing contacting said terminals exhibits a contact layer of non-woven fabric having at least 10% of fibers in a tangential direction.

2. Multitubular sheathing according to claim 1, wherein said contact layer has at least 20% of fibers in a tangential direction.

3. Multitubular sheathing according to any of the preceding claims 1-2, wherein said contact layer has at least 50% of fibers in a tangential direction.

4. Multitubular sheathing according to any of the preceding claims 1-3, wherein said contact layer has at least 90% of fibers in a tangential direction.

5. Multitubular sheathing according to any of the preceding claims 1-4, wherein said multitubular sheathing comprises a non-contacting layer, said non-contacting layer not touching the surface of said terminals, said non-contacting layer having randomly oriented fibers.

6. Multitubular sheathing according to any of the preceding claims 1-5, wherein said multitubular sheathing comprises a non-contacting layer, wherein said non-contacting layer is not intended to contact the surface of said terminals, said non-contacting layer having fibers oriented in the longitudinal direction.

7. Multitubular sheathing according to any of the preceding claims 1-6, wherein said multitubular sheathing comprises at least two non-contacting layer, wherein said non-contacting layer is not intended to contact the surface of said terminals, at least one of said non-contacting layers having randomly oriented fibers and at least one of said non-contacting layers having fibers oriented in the longitudinal direction.

8. Multitubular sheathing according to any of the preceding claims 1-7, wherein said multitubular sheathing comprises an external surface layer, wherein said external surface layer is a surface layer of said multitubular sheathing and wherein said external surface layer is not intended to contact the surface of said terminals, said external surface layer having fibers oriented in the longitudinal direction.

9. Multitubular sheathing according to any of the preceding claims 1-8, wherein said staple fibers are polyester, polyolefin or polyamide fibers, preferably PET, PBT, polypropylene and polyamide fibers.

10. Multitubular sheathing according to any of the preceding claims 1-9, wherein said fibers have a count between 0.1 and 6.7 dTex, preferably 1.0 and 3.3 dTex.

11. Multitubular sheathing according to any of the preceding claims 1-10, wherein said non-woven fabric further comprises a thermoplastic resin chosen among the group consisting of acrylic resins, methyl acrylate copolymer resins, styrene-butadiene resins, phenolic resins or mixtures thereof.

12. Process for making multitubular sheathing for electrodes, comprising the steps of :
- making a non-woven fabric starting from staple fibers; and
- forming the multitubular sheathing shape from said non-woven fabric in order to create a plurality of longitudinal pockets intended to receive the terminals of an electrode inside, said non-woven fabric being made so that the surface of said sheathing intended to contact said terminals has at least 10% of fibers in a tangential direction.

13. Process according to claim 12, wherein the multitubular shape fabric is formed according to the multitubular sheathing shape by sewing, stitching, thermal bonding, ultrasonic bonding, gluing or a combination thereof.

14. Process according to claims 12 or 13, wherein said non-woven fabric comprises a thermoplastic resin chosen from the group consisting of acrylic resins, methyl acrylate copolymer resins, styrene-butadiene resins, phenolic resins or mixtures thereof.

15. Process according to any of claims 12-14, wherein said non-woven fabric is subject to a hot calendaring step.
